(19) Europäisches Patentamt
European Patent Office
Office européen des brevets

(11) EP 4 732 936 A1

(12) EUROPEAN PATENT APPLICATION
published in accordance with Art. 153(4) EPC

(43) Date of publication:
29.04.2026 Bulletin 2026/18

(21) Application number: 24841692.7

(22) Date of filing: 23.05.2024

(51) International Patent Classification (IPC):
B01D 53/86 (2006.01)    F23J 15/00 (2006.01)

(52) Cooperative Patent Classification (CPC):
B01D 53/86; F23J 15/00

(86) International application number:
PCT/JP2024/019039

(87) International publication number:
WO 2025/022786 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023 JP 2023120363

(71) Applicant: Mitsubishi Heavy Industries, Ltd.
Tokyo 100-8332 (JP)

(72) Inventors:
• AKAGI, Shohei
Tokyo 100-8332 (JP)
• TODAKA, Shimpei
Tokyo 100-8332 (JP)
• KAKO, Hiroshi
Tokyo 100-8332 (JP)
• ISOBE, Tomoaki
Tokyo 100-8332 (JP)

(74) Representative: Studio Torta S.p.A.
Via Viotti, 9
10121 Torino (IT)

(54) DENITRATION DEVICE

(57) It is intended to improve NOx removal efficiency. A NOx removal device (10) includes: an ammonia injection unit (11) provided inside a duct (3) inside which an exhaust gas flows through and configured to inject ammonia to the exhaust gas flowing through inside the duct (3); a NOx removal catalyst (13) provided inside the duct (3) and downstream of the ammonia injection unit (11); and a rectifying unit (20) provided inside the duct (3) and upstream of the ammonia injection unit (11) so as to be spaced apart from the ammonia injection unit (11) by a predetermined distance and configured to rectify an exhaust gas flowing through inside the duct (3).

FIG. 2

EP 4 732 936 A1

# Description

[Technical Field]

The present disclosure relates to a NOx removal device.

[Background Art]

In Heat Recovery Steam Generators (HRSGs), an exhaust gas discharged from a gas turbine or the like passes through inside a duct, heat exchange is performed between the exhaust gas and water or steam in a heat transfer tube, and thereby steam is generated. Inside the duct of such a heat recovery steam generator, a plurality of heat exchangers having a number of heat transfer tubes through which water or steam flows, a NOx removal device configured to remove (denitrate) nitrogen oxides (NOx) in an exhaust gas, or the like are installed.

For example, in a NOx removal device, a reducing agent (for example, ammonia or urea water) having an effect of reducing nitrogen oxides is injected from an injection nozzle to an exhaust gas flowing through inside a duct, the exhaust gas subjected to the injection of the reducing agent passes through a reaction device (for example, a NOx removal catalyst), and thereby nitrogen oxides in the exhaust gas are removed. As such a NOx removal device, for example, a NOx removal device disclosed in Patent Literature 1 is known.

[Citation List]

[Patent Literature]

[PTL 1]
Japanese Patent Application Laid-Open No. H9-75673

[Summary of Invention]

[Technical Problem]

To increase the removal efficiency of nitrogen oxides (hereafter, referred to as "NOx removal efficiency") in a reaction device, it is effective to make a molar ratio between nitrogen oxides and a reducing agent uniform in a flow channel cross section of a duct.

In a NOx removal device, however, variation in the flow rate of an exhaust gas may occur over the entire flow channel cross section of a duct due to various factors. When the reducing agent is injected to the exhaust gas while such a state remains, variation will occur in the concentration of the reducing agent over the entire flow channel cross section. When an exhaust gas flows into a reaction device while variation occurs in the concentration of the reducing agent, this may cause variation in the amount of the inflow reducing agent at respective positions in the reaction device. When variation occurs in the amount of the reducing agent flowing into the reaction device, NOx removal efficiency of the reaction device may be reduced.

Note that, to mix an exhaust gas and a reducing agent and make the concentration of the reducing agent in the exhaust gas uniform in a flow channel cross section, a mixing device for mixing the exhaust gas with the reducing agent may be installed downstream of an injection nozzle and upstream of the reaction device. In general, however, mixing devices are formed of a combination of a plurality of cells for mixing an exhaust gas. Thus, when variation in the flow rate of the exhaust gas lies over the entire flow channel cross section of a duct, the concentration of a reducing agent may be unable to be made uniform suitably in the mixing device because the variation in the concentration of the reducing agent exceeds the limit of mixing ability of a single cell. Therefore, even when such a mixing device is provided, the NOx removal efficiency of the reaction device may be reduced.

The present disclosure has been made in view of such circumstances and intends to provide a NOx removal device that can improve NOx removal efficiency.

[Solution to Problem]

To solve the above problem, the NOx removal device of the present disclosure employs the following solution.

A NOx removal device according to one embodiment of the present disclosure includes: an injection unit provided inside a duct inside which an exhaust gas flows through and configured to inject a reducing agent to the exhaust gas flowing through inside the duct; a NOx removal catalyst provided inside the duct and downstream of the injection unit; and a rectifying unit provided inside the duct and upstream of the injection unit so as to be spaced apart from the injection unit by a predetermined distance and configured to rectify an exhaust gas flowing through inside the duct.

[Advantageous Effects of Invention]

According to the present disclosure, NOx removal efficiency can be improved.

[Brief Description of Drawings]

[Fig. 1]

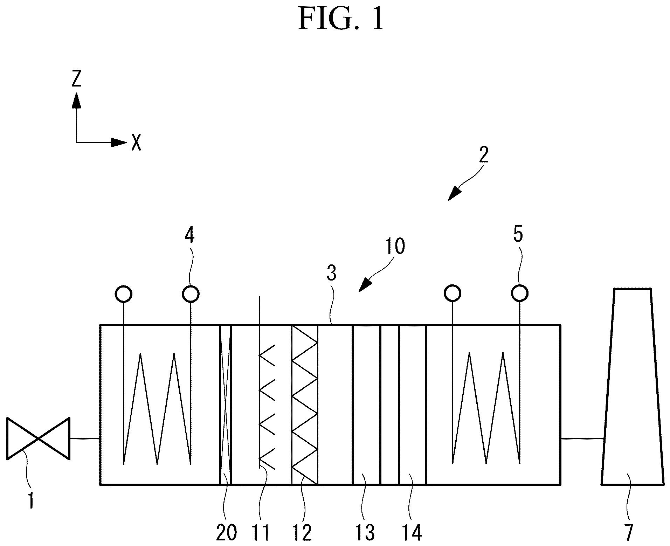

Fig. 1 is a schematic configuration diagram illustrating a heat recovery steam generator according to an embodiment of the present disclosure.
[Fig. 2]

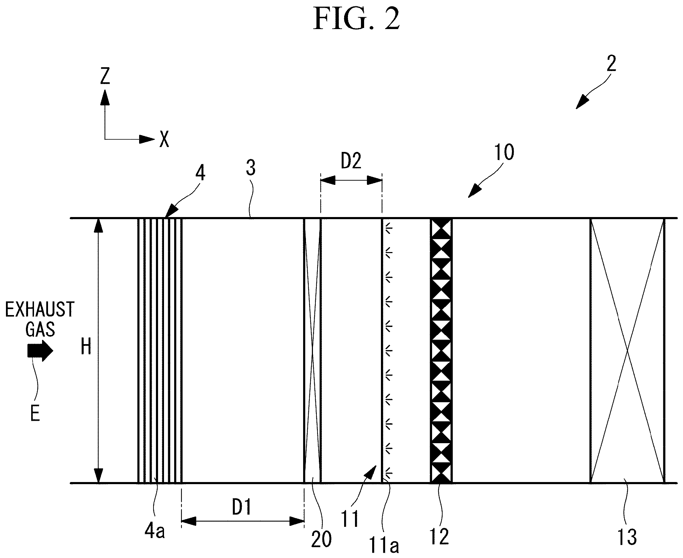

Fig. 2 is a schematic configuration diagram illustrating a NOx removal device according to the embodiment of the present disclosure.
[Fig. 3]

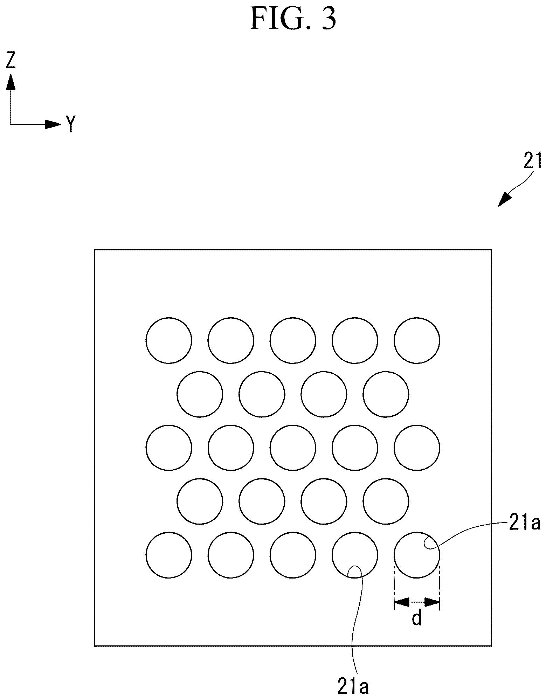

Fig. 3 is a schematic side view illustrating a perforated plate according to the embodiment of the present disclosure.

[Fig. 4]

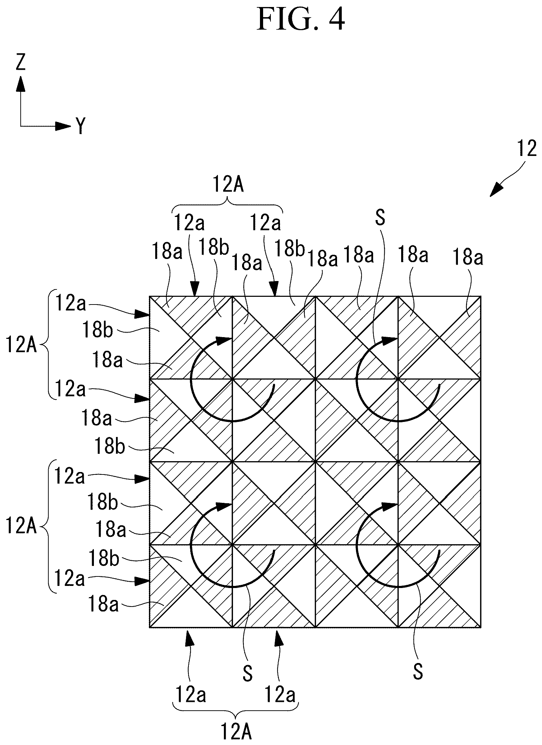

Fig. 4 is a schematic side view illustrating a mixer according to the embodiment of the present disclosure.

[Fig. 5]

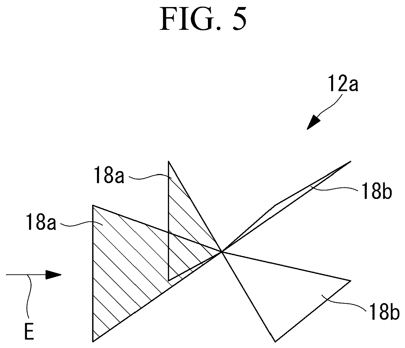

Fig. 5 is a schematic perspective view illustrating a cell of the mixer according to the embodiment of the present disclosure.

[Fig. 6]

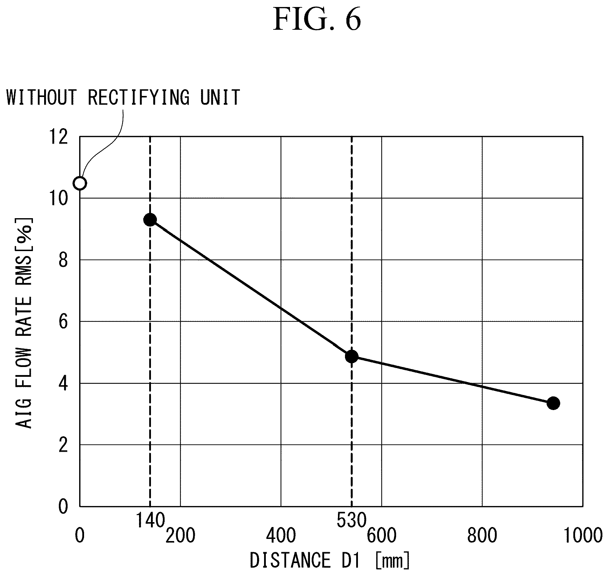

Fig. 6 is a graph illustrating a relationship between variation in the flow rate of an exhaust gas and the distance D1 in the NOx removal device according to the embodiment of the present disclosure.

[Description of Embodiments]

A NOx removal device according to an embodiment of the present disclosure will be described below with reference to Fig. 1 to Fig. 6. In the following description and the drawings, the vertical direction is referred to as a Z-axis direction, a direction in which an exhaust gas flows through out of the horizontal directions is referred to as an X-axis direction, and a direction perpendicular to the X-axis direction and the Z-axis direction is referred to as a Y-axis direction. In Fig. 2 and Fig. 5, the flowing direction of an exhaust gas is indicated by the arrow E.

First, a heat recovery steam generator 2 according to the present embodiment will be described with reference to Fig. 1.

As illustrated in Fig. 1, the heat recovery steam generator 2 according to the present embodiment is a horizontal-type heat recovery steam generator in which an exhaust gas flows in the X-axis direction (predetermined direction). In the present embodiment, the X-axis direction, which is a direction in which an exhaust gas flows, is the horizontal direction.

Note that, although an example in which a NOx removal device is provided inside a horizontal-type duct in which an exhaust gas flows horizontally is described in the present embodiment, the present disclosure is not limited thereto. For example, a NOx removal device may be provided inside a vertical-type duct in which an exhaust gas flows vertically.

The heat recovery steam generator 2 according to the present embodiment includes a duct 3 provided extending in the X-axis direction and configured to allow an exhaust gas to flow through the inside thereof, a NOx removal device 10 provided inside the duct 3 and configured to remove nitrogen oxides (NOx) contained in the exhaust gas, and a first heat exchange unit (resistance unit) 4 and a second heat exchange unit 5 provided inside the duct 3.

The first heat exchange unit 4 has a plurality of heat transfer tubes 4a (see Fig. 2) provided extending vertically (in the Z-axis direction) so as to intersect the exhaust gas flow direction. The length in the Z-axis direction of each heat transfer tube 4a (height H) is 5 m or greater and 30 m or less (see Fig. 2). The first heat exchange unit 4 recovers heat of an exhaust gas by heat exchange between a heat medium (for example, water or steam) flowing through inside the heat transfer tube 4a and an exhaust gas. The first heat exchange unit 4 is provided upstream from the NOx removal device 10. The first heat exchange unit 4 may be, for example, a superheater configured to superheat a heat medium flowing through inside the heat transfer tubes 4a.

The second heat exchange unit 5 has a plurality of heat transfer tubes (not illustrated) provided extending vertically (in the Z-axis direction) so as to intersect the exhaust gas flow direction. The second heat exchange unit 5 recovers heat of an exhaust gas by heat exchange between a heat medium (for example, water or steam) flowing through inside the heat transfer tube and an exhaust gas. The second heat exchange unit 5 is provided downstream from the NOx removal device 10. The second heat exchange unit 5 may be, for example, an evaporator configured to evaporate a heat medium flowing through inside the heat transfer tubes.

A high-temperature combustion exhaust gas (exhaust gas) discharged from a combustion engine 1 is introduced from the inlet of the duct 3 into the duct 3, passes through the first heat exchange unit 4, the NOx removal device 10, and the second heat exchange unit 5 in order, and is then discharged from a stack 7 through the outlet of the duct 3.

Next, the NOx removal device 10 will be described in detail with reference to Fig. 1 to Fig. 6.

The NOx removal device 10 supplies a reducing agent having an effect of reducing nitrogen oxides such as ammonia, urea water, or the like to an exhaust gas flowing through inside the duct 3, promotes a reaction between nitrogen oxides (NOx) and a reducing agent in the exhaust gas supplied with the reducing agent by a catalytic action of a NOx removal catalyst 13, and thereby removes or reduces nitrogen oxides in the exhaust gas. In the following description, an example in which an ammonia gas is used as a reducing agent will be described. Note that the reducing agent according to the present disclosure is not limited to the ammonia gas. For example, the reducing agent may be liquidous ammonia or may be other than ammonia.

As illustrated in Fig. 1 and Fig. 2, the NOx removal device 10 includes a rectifying unit 20, an ammonia injection unit (injection unit) 11, a mixer 12, the NOx removal catalyst 13, and an ammonia decomposition catalyst 14 that are arranged within the duct 3 in order from the upstream of an exhaust gas flow.

The rectifying unit 20 has a rectifying lattice (not illustrated) and a perforated plate 21 (see Fig. 3). The rectifying lattice is arranged upstream from the perforated plate 21. The rectifying lattice is a grid-like member arranged so as to cover substantially the entire region of the flow channel cross section of the duct 3.

The perforated plate 21 is mounted to the downstream part of the rectifying lattice. As illustrated in Fig. 3, the perforated plate 21 is arranged so as to cover substantially the entire region of the flow channel cross section of the duct 3. The perforated plate 21 is a metal plate-like member. In the perforated plate 21, as illustrated in Fig. 3, a plurality of through holes 21a penetrating through in the X-axis direction are formed. The plurality of through holes 21a are aligned at predetermined intervals along the Z-axis direction and the Y-axis direction. The diameter d of each through hole 21a is a length that enables rectification of an exhaust gas.

As illustrated in Fig. 2, the ammonia injection unit 11 has an ammonia pipe 11a extending in the Z-axis direction and a plurality of jetting nozzles (not illustrated) provided on the side face of the ammonia pipe 11a. The ammonia injection unit 11 jets an ammonia gas along the X-axis direction into the duct 3 from the plurality of jetting nozzles to inject ammonia to the exhaust gas flowing through the duct 3.

The ammonia pipe 11a is a circular cylindrical member. Ammonia flows through inside the ammonia pipe 11a.

The plurality of jetting nozzles are aligned at predetermined intervals along the extending direction of the ammonia pipe 11a (that is, the Z-axis direction). An ammonia gas is jetted from each jetting nozzle at a predetermined jetting pressure. Each jetting nozzle jets an ammonia gas in a conical shape.

The NOx removal catalyst 13 is arranged so as to cover substantially the entire region of the flow channel cross section of the duct 3. For example, the NOx removal catalyst 13 has a rectangular cylinder-shaped rectangular frame part (not illustrated) and a plurality of catalysts (not illustrated) provided inside the rectangular frame part. Although an example of the shape of the catalyst may be a honeycomb shape or a corrugate shape through which an exhaust gas can pass in the X-axis direction, the shape is not limited thereto. The catalyst promotes a reducing reaction of NOx (nitrogen oxides) contained in an exhaust gas (combustion gas) passing through the inside to remove at least a part of NOx. For example, the component of the catalyst is based on titanium oxide.

The ammonia decomposition catalyst 14 is arranged so as to cover substantially the entire region of the flow channel cross section of the duct 3. The ammonia decomposition catalyst 14 decomposes ammonia contained in an exhaust gas to remove ammonia out of the exhaust gas. In the present embodiment, since the ammonia decomposition catalyst 14 is provided downstream of the NOx removal catalyst 13, ammonia in an exhaust gas left unreacted with the NOx removal catalyst 13 can be decomposed by the ammonia decomposition catalyst 14.

The mixer 12 is arranged so as to cover substantially the entire region of the flow channel cross section of the duct 3. As illustrated in Fig. 4, the mixer 12 includes a plurality of mixing units 12A that forms a swirl flow S swirling about the central axis extending in the X-axis direction. Further, each mixing unit 12A has a plurality of (in the present embodiment, four, as an example) cells 12a. That is, the mixing unit 12A forms a single swirl flow (vortex) S with a combination of the plurality of cells 12a. The swirl flow S is formed at substantially the center of the mixing unit 12A.

The exhaust gas that has passed through the mixer 12 (in detail, the exhaust gas to which ammonia has been injected) makes a plurality of swirl flows S and flows through in a space downstream of the mixer 12. In such a way, the mixer 12 forms the swirl flows S to mix an exhaust gas flowing through inside a duct with ammonia.

As illustrated in Fig. 4, the plurality of mixing units 12A have a plurality of (in the present embodiment, two, as an example) mixing units 12A aligned in the Z-axis direction and a plurality of (in the present embodiment, two, as an example) mixing units 12A aligned in the Y-axis direction. Note that the number of mixing units 12A is an example and not limited to the number in the present embodiment.

The mixing unit 12A has a plurality of (in the present embodiment, two, as an example) cells 12a aligned in the Z-axis direction and the Y-axis direction. The cells 12a have a regular shape. Cells 12a adjacent to each other in the Z-axis direction and the Y-axis direction are arranged such that the orientations thereof are rotated from one to another by 90 degrees about the central axis extending in the X-axis direction.

As illustrated in Fig. 5, each cell 12a is formed of four triangular and plate-like plate parts 18. The four plate parts 18 have the same shape. The four plate parts 18 have two upstream plate parts 18a arranged upstream from the center point in the X-axis direction of the cell 12a and two downstream plate parts 18b arranged downstream from the center point.

The two upstream plate parts 18a are arranged so as to be two opposed faces of a virtual square pyramid whose vertex is arranged downstream. The two upstream plate parts 18a are arranged such that their vertexes arranged most downstream are in contact with each other.

The two downstream plate parts 18b are arranged so as to be two opposed faces of a virtual square pyramid whose vertex is arranged upstream. The two downstream plate parts 18b are arranged such that their vertexes arranged most upstream are in contact with each other.

The vertex arranged most downstream of the upstream plate part 18a and the vertex arranged most upstream of the downstream plate part 18b are in contact with each other. Further, the upstream plate part 18a and the downstream plate part 18b are arranged such that the orientations thereof are rotated from one to another by 90 degrees about the central axis extending in the X-axis direction.

Note that the structure of the mixer 12 is not limited to the structure of the above description. The mixer 12 may be of any structure having regular shapes aligned that cause a swirl flow by a combination of a plurality of flat faces or curved faces.

Next, arrangement of each device of the NOx removal device 10 will be described.

As illustrated in Fig. 2, the distance D1 from the downstream end of the first heat exchange unit 4 to the upstream end of the rectifying unit 20 is 140 mm or greater. Preferably, the distance D1 from the first heat exchange unit 4 to the rectifying unit 20 is 530 mm or greater.

The distance D2 from the downstream end of the rectifying unit 20 to the upstream end of the ammonia injection unit 11 is a length that is greater than or equal to 11 times the diameter d of each through hole 21a formed in the perforated plate 21 of the rectifying unit 20. That is, Equation (1) below is established.

$$D2 \geq 11d \quad \ldots(1)$$

According to the present embodiment, the following effects and advantages are achieved.

In the present embodiment, the rectifying unit 20 is provided upstream of the ammonia injection unit 11 so as to be spaced apart from the ammonia injection unit 11 by a predetermined distance. Accordingly, since an exhaust gas is rectified by the rectifying unit 20 in upstream of the ammonia injection unit 11, the flow rate distribution of an exhaust gas in the flow channel cross section of the duct 3 can be made uniform. Therefore, the ammonia injection unit 11 injects ammonia to an exhaust gas whose flow rate has been made uniform. Thus, variation in the ammonia concentration due to the variation in the flow rate at respective positions in the flow channel cross section can be suppressed. Accordingly, an exhaust gas may flow into the NOx removal catalyst 13 with the variation in the ammonia concentration being suppressed, a NOx removal reaction suitably occurs in the NOx removal catalyst 13, and this can improve the NOx removal efficiency.

In general, the rectifying unit 20 (for example, the lattice or the perforated plate 21) has an effect of making a gas flow rate uniform in upstream of the rectifying unit 20 so that the pressure loss in the flow channel cross section of a gas passing through the rectifying unit 20 is made uniform. In such a situation, when the first heat exchange unit 4 is provided in the gas flow upstream of the rectifying unit 20, making uniform of the flow rate of the exhaust gas may be inhibited by the first heat exchange unit 4. In particular, when the heat transfer tubes 4a of the first heat exchange unit 4 extend in the Z-axis direction, variation in the flow rate in the Z-axis direction tends to be larger.

In contrast, in the present embodiment, the rectifying unit 20 is provided at a position distant by a predetermined distance (specifically, 140 mm or greater) from the first heat exchange unit 4. Accordingly, since a sufficient distance D1 between the rectifying unit 20 and the first heat exchange unit 4 can be ensured, this can reduce an impact of the first heat exchange unit 4 on the effect of rectifying (making uniform of the flow rate in the exhaust gas flow direction in the flow channel cross section) an exhaust gas in the rectifying unit 20. Therefore, in the rectifying unit 20, the flow rate distribution of the exhaust gas in the flow channel cross section of the duct 3 can be made uniform. Thus, the NOx removal efficiency can be improved.

In particular, when the length H in the longitudinal direction of the heat transfer tube 4a of the first heat exchange unit 4 is 5 m or greater and 30 m or less, the flow rate distribution of the exhaust gas in the flow channel cross section of the duct 3 can be more suitably made uniform in the rectifying unit 20.

The effect of improving the NOx removal efficiency will be described in detail with reference to the graph of Fig. 6. The vertical axis of Fig. 6 represents variation in the flow rate of an exhaust gas in the ammonia injection unit 11 (AIG) (in detail, root mean square (RMS)), and the horizontal axis represents the value of the distance D1 from the first heat exchange unit 4 to the rectifying unit 20.

In Fig. 6, the larger the distance D1 is, the smaller the variation in the flow rate of an exhaust gas is. In particular, it can be understood that, when the distance D1 of 140 mm or greater is ensured, the variation in the flow rate of the exhaust gas is sufficiently small. Therefore, it can be understood also from the graph of Fig. 6 that the distance D1 being a length of 140 mm or greater suppresses the variation in the flow rate of an exhaust gas.

In Fig. 6, when the distance D1 is less than or equal to 530 mm, the slope is larger than in the case where the distance D1 is greater than 530 mm. Therefore, it can be understood that the variation is likely to be more effectively suppressed when the distance D1 is below 530 mm. Thus, it can be understood that, when the distance D1 is a length of 530 mm or greater, the variation in the flow rate of an exhaust gas is more suitably suppressed.

Note that, in Fig. 6, the case of the distance D1 being 0 represents a case without the rectifying unit 20 being provided. In such a case, the variation in the flow rate is the largest. Thus, it can be understood that the rectifying unit 20 has a variation suppression effect.

In the present embodiment, the rectifying unit 20 has the lattice part. This makes it possible to rectify an exhaust gas passing through the lattice part. Therefore, in the lattice part, the flow rate distribution of the exhaust gas in the flow channel cross section of the duct 3 can be made uniform. Thus, the NOx removal efficiency can be improved.

In the present embodiment, the rectifying unit 20 has the perforated plate 21. This makes it possible to rectify an exhaust gas passing through the perforated plate 21. Therefore, in the perforated plate 21, the flow rate distribution of the exhaust gas in the flow channel cross section of the duct 3 can be made uniform. Thus, the NOx removal efficiency can be improved.

In the present embodiment, the distance D2 from the perforated plate 21 to the ammonia injection unit 11 is longer than the length that is 11 times the diameter d of the through hole 21a. When an exhaust gas passes through the through holes 21a of the perforated plate 21, a jet flow occurs in the exhaust gas. In the present embodiment, however, since a long distance D2 from the perforated plate 21 to the ammonia injection unit 11 can be ensured, an exhaust gas with a sufficiently attenuated jet flow reaches the ammonia injection unit 11. That is, an exhaust gas with suppressed variation in the flow rate at respective positions in the flow channel cross section reaches the ammonia injection unit 11. Accordingly, ammonia can be injected to the exhaust gas with the suppressed variation. Thus, variation in the ammonia concentration due to the variation in the flow rate at respective positions in the flow channel cross section can be suppressed. Thus, the exhaust gas may flow into the NOx removal catalyst 13 with the suppressed variation in the ammonia concentration, a NOx removal reaction suitably occurs in the NOx removal catalyst 13, and thus, the NOx removal efficiency can be improved.

Note that the present disclosure is not limited to each embodiment described above and can be modified as appropriate within the scope not departing from the spirit thereof.

For example, although the example in which the distance from the first heat exchange unit 4 to the perforated plate 21 is 140 mm or greater (more preferably, 530 mm or greater) has been described in the above embodiment, the present disclosure is not limited thereto. It is only required to have a distance of 140 mm or greater (more preferably, 530 mm or greater) from a structure that is provided upstream of the perforated plate 21 and affects a flow of an exhaust gas in the duct 3 (hereafter, referred to as "upstream structure") to the perforated plate 21. The upstream structure may be, for example, a structure having an elongated member extending in the Y-axis direction or the Z-axis direction, which may be, for example, a reinforced member (a strut, a brace, or the like) for reinforcing the duct 3 from inside as an example.

Note, when there are a plurality of the upstream structures, the distance from the upstream structure closest to the perforated plate 21 to the perforated plate 21 may be 140 mm or greater (more preferably, 530 mm or greater).

The NOx removal device according to the embodiment described above is understood as follows, for example.

The NOx removal device according to the first aspect of the present disclosure includes: an injection unit (11) provided inside a duct (3) inside which an exhaust gas flows through and configured to inject a reducing agent to an exhaust gas flowing through inside the duct; a NOx removal catalyst (13) provided inside the duct and downstream of the injection unit; and a rectifying unit (20) provided inside the duct and upstream of the injection unit so as to be spaced apart from the injection unit by a predetermined distance and configured to rectify an exhaust gas flowing through inside the duct.

In the above configuration, the rectifying unit is provided upstream of the injection unit so as to be spaced apart from the injection unit by a predetermined distance. Accordingly, since an exhaust gas is rectified by the rectifying unit in upstream of the injection unit, the flow rate distribution of an exhaust gas in the flow channel cross section of the duct can be made uniform. Therefore, the injection unit injects a reducing agent to an exhaust gas whose flow rate has been made uniform. Thus, variation in the reducing agent concentration due to the variation in the flow rate at respective positions in the flow channel cross section can be suppressed. Accordingly, an exhaust gas may flow into the NOx removal catalyst with the suppressed variation in the reducing agent concentration, a NOx removal reaction suitably occurs in the NOx removal catalyst, and this can improve the NOx removal efficiency.

The NOx removal device according to the second aspect of the present disclosure, in the first aspect described above, includes a resistance unit (4) provided inside the duct and upstream of the rectifying unit and configured to provide a resistance to a flow of an exhaust gas, and the rectifying unit is provided at a position distant by 140 mm or greater from the resistance unit.

In general, the rectifying unit (for example, the lattice or the perforated plate) has an effect of making a gas flow rate uniform in upstream of the rectifying unit so that the pressure loss in the flow channel cross section of a gas passing through the rectifying unit is made uniform. In such a situation, when the resistance unit is provided in the gas flow upstream of the rectifying unit, making uniform of the flow rate of the exhaust gas may be inhibited by the resistance unit.

In the above configuration, the rectifying unit is provided at a position distant by 140 mm or greater from the resistance unit. Accordingly, since a sufficient distance between the rectifying unit and the resistance unit can be ensured, this can reduce an impact of the resistance unit on the effect of rectifying (making uniform of the flow rate in the exhaust gas flow direction in the flow channel cross section) an exhaust gas in the rectifying unit. Therefore, in the rectifying unit, the flow rate distribution of the exhaust gas in the flow channel cross section of the duct can be made uniform. Thus, the NOx removal efficiency can be improved.

Note that it is more preferable for the rectifying unit to be provided at a position distant by 530 mm or greater from the resistance unit.

In the NOx removal device according to the third aspect of the present disclosure, in the first aspect or the second aspect described above, the rectifying unit has a grid-like lattice part.

In the above configuration, it is possible to rectify an exhaust gas passing through the lattice part. Accordingly, in the lattice part, the flow rate distribution of the exhaust gas in the flow channel cross section of the duct can be made uniform. Thus, the NOx removal efficiency can be improved.

In the NOx removal device according to the fourth aspect of the present disclosure, in any of the first aspect to the third aspect described above, the rectifying unit has a perforated plate (21) having a plurality of through holes (21a).

In the above configuration, it is possible to rectify an exhaust gas passing through the perforated plate. Accordingly, in the perforated plate, the flow rate distribution of the exhaust gas in the flow channel cross section of the duct can be made uniform. Thus, the NOx removal efficiency can be improved.

In the NOx removal device according to the fifth aspect of the present disclosure, in the fourth aspect described above, the distance from the perforated plate to the injection unit is longer than a length that is 11 times a diameter of each of the through holes.

In the above configuration, the distance from the perforated plate to the injection unit is longer than the length that is 11 times the diameter of the through hole. When an exhaust gas passes through the through holes of the perforated plate, a jet flow occurs in the exhaust gas. In the above configuration, however, since a long distance from the perforated plate to the injection unit can be ensured, an exhaust gas with a sufficiently attenuated jet flow reaches the injection unit. That is, an exhaust gas with suppressed variation in the flow rate at respective positions in the flow channel cross section reaches the injection unit. Accordingly, a reducing agent can be injected to the exhaust gas with the suppressed variation. Thus, variation in the reducing agent concentration due to the variation in the flow rate at respective positions in the flow channel cross section can be suppressed. Thus, the exhaust gas may flow into the NOx removal catalyst with the suppressed variation in the reducing agent concentration, a NOx removal reaction suitably occurs in the NOx removal catalyst, and thus, the NOx removal efficiency can be improved.

[Reference Signs List]

1      combustion engine
2      heat recovery steam generator
3      duct
4      first heat exchange unit (resistance unit)
4a     heat transfer tube
5      second heat exchange unit
7      stack
10     NOx removal device
11     ammonia injection unit (injection unit)
11a    ammonia pipe
12     mixer

12A    mixing unit
12a    cell
13     NOx removal catalyst
14     ammonia decomposition catalyst
18     plate part
18a    upstream plate part
18b    downstream plate part
20     rectifying unit
21     perforated plate
21a    through hole

**Claims**

1. A NOx removal device comprising:

   an injection unit provided inside a duct inside which an exhaust gas flows through and configured to inject a reducing agent to the exhaust gas flowing through inside the duct;
   a NOx removal catalyst provided inside the duct and downstream of the injection unit; and
   a rectifying unit provided inside the duct and upstream of the injection unit so as to be spaced apart from the injection unit by a predetermined distance and configured to rectify an exhaust gas flowing through inside the duct.

2. The NOx removal device according to claim 1 further comprising a resistance unit provided inside the duct and upstream of the rectifying unit and configured to provide a resistance to a flow of an exhaust gas, wherein the rectifying unit is provided at a position distant by 140 mm or greater from the resistance unit.

3. The NOx removal device according to claim 1, wherein the rectifying unit has a grid-like lattice part.

4. The NOx removal device according to claim 1, wherein the rectifying unit has a perforated plate having a plurality of through holes.

5. The NOx removal device according to claim 4, wherein the distance from the perforated plate to the injection unit is longer than a length that is 11 times a diameter of each of the through holes.

# FIG. 1

# FIG. 2

# FIG. 3

Z

Y

21

21a

21a

d

# FIG. 4

FIG. 5

FIG. 6

## INTERNATIONAL SEARCH REPORT

| International application No. |
| --- |
| **PCT/JP2024/019039** |

**A.    CLASSIFICATION OF SUBJECT MATTER**

*B01D 53/86*(2006.01)i; *F23J 15/00*(2006.01)i

FI:    B01D53/86 222; F23J15/00 A ZAB; F23J15/00 H; F23J15/00 Z

According to International Patent Classification (IPC) or to both national classification and IPC

**B.    FIELDS SEARCHED**

Minimum documentation searched (classification system followed by classification symbols)

B01D53/86; F23J15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2010-264400 A (IHI CORP.) 25 November 2010 (2010-11-25)<br>claims, paragraphs [0020], [0024], fig. 2-3 | 1-5 |
| A | JP 2016-203032 A (MITSUBISHI HITACHI POWER SYSTEMS IND CO., LTD.) 08 December 2016 (2016-12-08)<br>entire text | 1-5 |
| A | JP 2009-108726 A (MITSUBISHI HEAVY INDUSTRIES, LTD.) 21 May 2009 (2009-05-21)<br>entire text | 1-5 |

☐ Further documents are listed in the continuation of Box C.          ☑ See patent family annex.

| | |
| --- | --- |
| \*      Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **02 August 2024** | **13 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/019039**

| Patent document cited in search report | | | Publication date (day/month/year) | Patent family member(s) | Publication date (day/month/year) |
|---|---|---|---|---|---|
| JP | 2010-264400 | A | 25 November 2010 | (Family: none) | |
| JP | 2016-203032 | A | 08 December 2016 | (Family: none) | |
| JP | 2009-108726 | A | 21 May 2009 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H975673 A